(19) Europäisches Patentamt
European Patent Office
Office européen des brevets

(11) **EP 4 572 085 A1**

(12) **DEMANDE DE BREVET EUROPEEN**

(43) Date de publication:
**18.06.2025 Bulletin 2025/25**

(21) Numéro de dépôt: **24208798.9**

(22) Date de dépôt: **24.10.2024**

(51) Classification Internationale des Brevets (IPC):
**H02J 7/00** (2006.01)

(52) Classification Coopérative des Brevets (CPC):
**H02J 7/007182**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **17.11.2023 FR 2312650**

(71) Demandeur: **Commissariat à l'Energie Atomique
et aux Energies
Alternatives
75015 Paris (FR)**

(72) Inventeurs:
• **CASIEZ, Lara**
**38054 GRENOBLE CEDEX 09 (FR)**
• **CELE, Jacopo**
**38054 GRENOBLE CEDEX 09 (FR)**
• **OUKASSI, Sami**
**38054 GRENOBLE CEDEX 09 (FR)**

(74) Mandataire: **Atout PI Laplace
Immeuble Up On
25 Boulevard Romain Rolland
CS 40072
75685 Paris Cedex 14 (FR)**

(54) **PROCÉDÉ DE CHARGE ULTRA RAPIDE D'UNE CELLULE D'ACCUMULATEUR ÉLECTROCHIMIQUE**

(57) L'invention se rapporte à un procédé de charge d'une cellule d'accumulateur électrochimique, dans lequel la tension aux bornes de la cellule est maintenue constante à au moins deux niveaux de tension prédéfinis successifs, le courant de charge fourni à la cellule diminuant progressivement à mesure que la batterie se charge, le procédé comprenant :
E1) une première étape d'application d'une première tension ($V_1$) aux bornes de la cellule, la première tension ($V_1$) étant supérieure à une tension de charge usuelle ($V_{bat}$), la tension de charge usuelle ($V_{bat}$) étant définie comme étant une tension telle qu'elle n'entraînerait pas une dégradation électrochimique de la cellule si elle était appliquée sur un cycle complet de charge de la cellule ;
E2) une deuxième étape d'application de la tension de charge usuelle ($V_{bat}$).

FIG. 1

EP 4 572 085 A1

**Description**

**Domaine technique**

La présente invention se rapporte à un procédé de charge d'une cellule d'accumulateur électrochimique, ainsi qu'à un système apte à mettre en oeuvre le procédé.

Une cellule d'accumulateur électrochimique est l'unité de base d'une batterie ou d'un accumulateur électrochimique. Elle est composée de deux électrodes (une anode et une cathode) et d'un électrolyte qui permet les réactions chimiques qui génèrent de l'énergie électrique.

Les cellules électrochimiques dans une batterie sont connectées en série ou en parallèle, ou par une combinaison des deux, en fonction de la tension et de la capacité requises pour l'application spécifique.

La vitesse de charge d'une cellule dépend de nombreux facteurs, notamment la capacité de la cellule, la technologie de la cellule, le courant de charge, ou encore les caractéristiques de sécurité.

Il existe plusieurs documents de l'état de la technique qui visent à réduire le temps de charge d'une cellule.

Le document [1] décrit un protocole de charge adaptative mis en oeuvre pour charger rapidement une batterie rechargeable ayant des bornes d'électrode connectées aux bornes d'une alimentation électrique prévue pour appliquer des tensions variables dans le temps aux électrodes, comprenant, avant de commencer une opération de charge pour la batterie, les étapes consistant à : détecter l'existence de données historiques sur les opérations de charge précédentes de la batterie ; en cas de détection, traiter les données historiques pour ajuster les paramètres de charge en vue d'optimiser l'opération de charge ; en l'absence de détection, tester électriquement la batterie pour obtenir des données sur les variations de l'état de charge (SOC) de la batterie, en vue de construire un modèle d'apprentissage sur les variations SOC à utiliser pour optimiser l'opération de charge.

Le document [2] décrit un procédé de charge rapide de batteries au lithium qui consiste à charger la batterie dans une première phase en maximisant le courant de charge, puis à charger la batterie dans une seconde phase en diminuant le courant de charge en réponse à un potentiel anodique déterminé par une électrode de référence pour maintenir le potentiel d'anode au niveau ou au-dessus d'un seuil, puis charger la batterie dans une troisième phase en diminuant le courant de charge en réponse au potentiel cathodique déterminé par l'électrode de référence de telle sorte que le potentiel cathodique soit maximisé sans dépasser le seuil de potentiel cathodique. Un contrôleur peut déterminer un potentiel anodique ou un potentiel cathodique en temps réel à l'aide d'un signal de potentiel de cellule et d'un signal d'électrode de référence cathodique anodique, respectivement. Le seuil est le potentiel d'anode au-dessus duquel pratiquement aucun placage au lithium ne se produit.

Le document [3] décrit une batterie rechargeable comprenant une anode, une cathode, un électrolyte disposé entre l'anode et la cathode, un boîtier de protection qui entoure au moins partiellement l'anode, la cathode et l'électrolyte, un élément répartiteur de chaleur disposé au moins partiellement à l'intérieur du boîtier de protection et configuré pour recevoir de la chaleur provenant d'une source de chaleur externe à une température de chauffage souhaitée Th afin de chauffer la batterie à une température souhaitée Tc pour le chargement de la batterie, ce qui permet d'abaisser le temps de charge.

Dans ces documents de l'art antérieur, le temps de charge reste très long, plusieurs dizaines de minutes, par rapport aux spécifications applicatives, d'autant plus que la densité d'énergie a tendance à augmenter dans les nouvelles batteries.

Il existe donc un besoin pour fournir un procédé de charge d'une cellule d'accumulateur électrochimique, qui réduit le temps de charge de façon significative par rapport aux procédés connus de l'art antérieur.

**Résumé de l'invention**

Un objet de l'invention est donc un procédé de charge d'une cellule d'accumulateur électrochimique, dans lequel la tension aux bornes de la cellule est maintenue constante à au moins deux niveaux de tension prédéfinis successifs, le courant de charge fourni à la cellule diminuant progressivement à mesure que la batterie se charge, le procédé comprenant :

E1) une première étape d'application d'une première tension aux bornes de la cellule, la première tension étant supérieure à une tension de charge usuelle, la tension de charge usuelle étant définie comme étant une tension telle qu'elle n'entraînerait pas une dégradation électrochimique de la cellule si elle était appliquée sur un cycle complet de charge de la cellule ;

E2) une deuxième étape d'application de la tension de charge usuelle.

Avantageusement, la première étape est appliquée pour un paramètre de charge tel que la résistance interne de la cellule ne soit pas supérieure à un seuil prédéterminé.

Avantageusement, le paramètre de charge est sélectionné parmi une capacité de charge, un courant de charge, une tension de charge, ou un temps de charge.

Avantageusement, la première tension est définie par la formule :

$$V_1 = \max\ (2{,}5 * V_{bat}\ \text{ou}\ 10{,}5\ V)$$

Max correspondant à la tension maximum, et $V_{bat}$ correspondant à la tension de charge usuelle de la cellule.

Avantageusement, le pourcentage de capacité de charge générée à la tension de charge usuelle sur la capacité totale générée à la première tension de charge et à la tension de charge usuelle est compris entre 10% et 50%.

Avantageusement, la cellule comprend un électrolyte dont la conductivité électronique est inférieure à $10^{-9}$ $(\Omega . m)^{-1}$.

Avantageusement, la cellule comprend un électrolyte solide.

Avantageusement, l'électrolyte comprend l'un des matériaux sélectionné parmi le LiPoN, $Li_3OCl$, le LiSiON, le LiN, le LATP.

L'invention se rapporte également à un système de gestion de la charge d'une cellule, caractérisé en ce qu'il est configuré pour mettre en oeuvre le procédé précité.

**Description des figures**

D'autres caractéristiques, détails et avantages de l'invention ressortiront à la lecture de la description faite en référence aux dessins annexés donnés à titre d'exemple.

La figure 1 illustre schématiquement les étapes du procédé selon l'invention.

La figure 2 illustre la tension appliquée et l'état de charge en fonction du temps obtenus avec le procédé selon l'invention.

La figure 3 illustre la courbe de charge d'une cellule à différentes valeurs de tension de charge, en fonction du temps.

La figure 4 illustre la densité d'énergie fournie en fonction du nombre de cycles de charge/décharge.

La figure 5 illustre l'évolution de la résistance interne de la cellule en fonction de la charge.

La figure 6 illustre la résistance interne, pour différents protocoles de charge.

La figure 7 illustre une comparaison du procédé selon l'invention avec des procédés de charge connus de l'état de la technique.

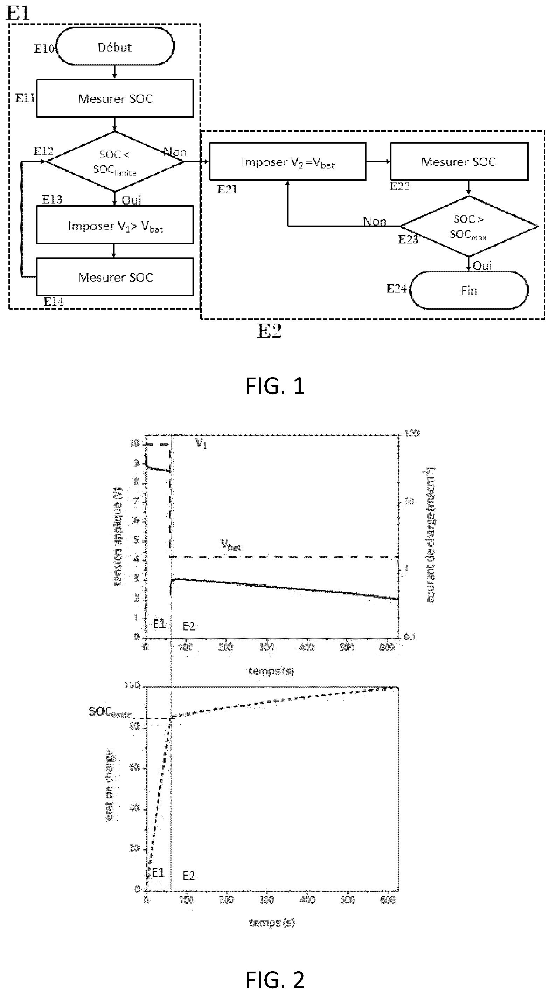

Le procédé selon l'invention, est illustré par la figure 1. Dans une étape initiale (non représentée), la cellule est connectée à une source d'alimentation appropriée, qui peut être un chargeur spécifique conçu pour la chimie de la cellule.

De façon optionnelle, et non représentée sur la figure 1, le procédé peut également comprendre une étape de fourniture d'un courant de charge rapide afin d'accélérer la charge.

Le procédé selon l'invention comprend une application d'une tension constante aux bornes de la cellule, dans laquelle la tension est maintenue constante à au moins deux niveaux de tension prédéfinis successifs, le courant diminuant progressivement à mesure que la cellule se charge.

Le procédé comprend deux étapes.

La première étape E1 consiste à appliquer une première tension $V_1$ aux bornes de la cellule, la première tension $V_1$ étant supérieure à une tension de charge usuelle $V_{bat}$. La tension de charge usuelle $V_{bat}$ est définie comme étant une tension telle qu'elle n'entraînerait pas une dégradation électrochimique de la cellule si elle était appliquée sur un cycle complet de charge de la cellule.

La tension de charge usuelle $V_{bat}$, également appelée « tension de coupure de charge », correspond également à la tension à laquelle la cellule atteint sa capacité maximale à l'issue du processus de charge. Il s'agit ainsi de la tension à laquelle la cellule ne doit pas être chargée au-delà pour éviter des problèmes de sécurité, de performance ou de durée de vie de la batterie.

Pour une batterie comprenant une pluralité de cellules, la tension de charge usuelle est calculée en fonction du nombre total de cellules et de l'agencement série/parallèle des cellules. La tension de charge d'une cellule est variable selon le type d'anode et de cathode choisies. Dans le cadre de la présente invention, la tension de charge usuelle $V_{bat}$ d'une cellule lithium-ion vaut 4,2 V.

Le procédé commence à la sous-étape E10. L'état de charge SOC (pour « State Of Charge ») est meuré à la sous-étape E11. Si l'état de charge est inférieur à un état de charge limite $SOC_{limite}$ (sous-étape E12), la première tension $V_1$ est appliquée (sous-étape E13), puis L'état de charge SOC est mesuré (sous-étape E14), et ainsi de suite tant que l'état de charge est inférieur à un état de charge limite $SOC_{limite}$.

Sur la figure 2, l'état de charge augmente rapidement durant la première étape E1 (application de la première tension $V_1$).

La deuxième étape E2 consiste à appliquer la tension de charge usuelle $V_{bat}$.

Sur la figure 2, durant la deuxième étape E2, l'état de charge augmente plus lentement, et le courant de charge diminue progressivement à mesure que la batterie se charge.

Lorsque la cellule est complètement chargée, le chargeur peut soit réduire le courant à un niveau très bas (maintenance de charge), soit arrêter complètement la charge (étape non illustrée sur la figure 1).

Sur la figure 1, la tension de charge usuelle $V_{bat}$ est imposée (sous-étape E21) dès que l'état de charge est supérieur ou égal à un état de charge limite $SOC_{limite}$ (sous-étape E12). L'état de charge SOC est mesuré (sous-étape E22). Si l'état de charge est supérieur à un état de charge maximal $SOC_{max}$ (sous-étape E23), le procédé se termine (sous-étape E24). Dans le cas contraire, la tension de charge usuelle $V_{bat}$ est maintenue.

L'état de charge maximal $SOC_{max}$ est défini par l'utilisateur par rapport aux caractéristiques de la batterie. On peut définir et mesurer l'état de charge maximal $SOC_{max}$ de deux manières :

- par la capacité chargée (en $\mu Ah$)

- par la mesure de la tension de circuit ouvert

De plus, une fois la cellule complètement chargée, elle peut être déconnectée de la source d'alimentation pour éviter une surcharge qui pourrait endommager la cellule (étape non illustrée sur la figure 1).

Contrairement à ce que pourrait croire l'homme du métier, le fait d'appliquer, pour une certaine quantité de charge par rapport à la quantité de charge totale, une tension supérieure à la tension de charge usuelle, n'a pas d'influence néfaste sur le fonctionnement de la cellule, et permet de réduire drastiquement le temps de charge, à capacité constante (de 30 minutes avec un procédé de charge classique à 1 minute 30 avec le procédé selon l'invention).

Il est rappelé que : Temps de charge (h) = Capacité de la batterie (A.h) / Courant de charge (A)

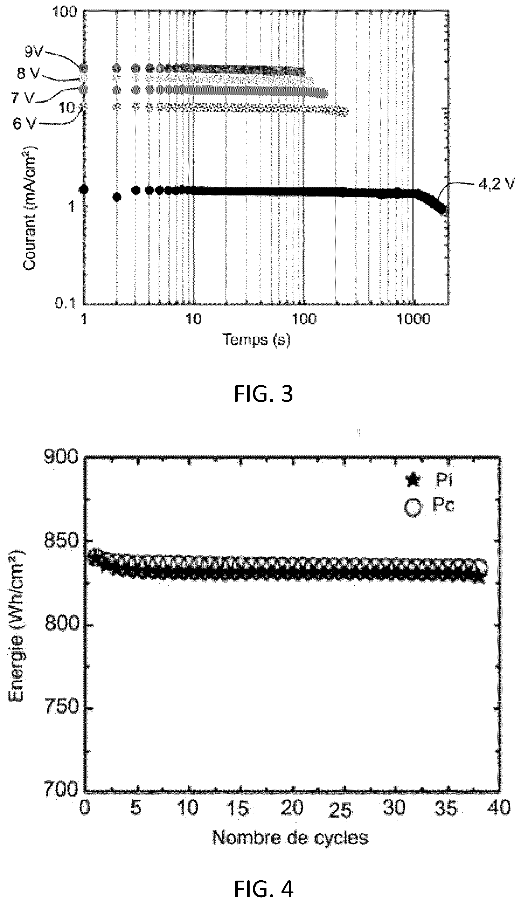

La figure 3 illustre cet effet, pour une batterie à couche mince (TFB pour Thin-Film Battery) de 20 $\mu m$ d'épaisseur.

Une batterie à couche mince, également appelée micro-batterie peut être définie comme une batterie présentant toutes les caractéristiques suivantes :

- Toutes les couches actives (c'est-à-dire l'électrode positive, l'électrolyte et l'électrode négative) sont constituées uniquement de matériau inorganique à l'état solide. Généralement, cela signifie qu'aucun électrolyte polymère liquide ou gel, et aucun matériau d'électrode contenant des liants polymères comme c'est le cas dans les batteries « standards », ne se trouvent dans la batterie.

- L'épaisseur individuelle de toutes les couches actives (c'est-à-dire l'électrode positive, l'électrolyte et la couche négative) électrode) est inférieure à 50 $\mu m$. De plus, l'épaisseur de l'électrolyte est généralement inférieure à 5 $\mu m$. Pour batteries standard, l'épaisseur de chaque couche est généralement supérieure à 100 $\mu m$

- Les dimensions de la surface varient généralement de quelques $mm^2$ à 10 $cm^2$.

Avec un seul niveau de tension constante à la tension de charge usuelle ($V_{bat} = 4,2$ V), un courant égal à environ 1 $mA/cm^2$ est atteint dans une micro-batterie. En appliquant une première tension $V_1$ supérieure à la tension de charge usuelle $V_{bat}$, un courant plus de dix fois supérieur peut être obtenu, sans avoir à rallonger le processus de charge. Par exemple, la première tension $V_1$ peut être fixée à 6 V, 7 V, 8 V, 9 V ou 10V.

Pour une cellule dont la tension de référence est égale à 4,2 V, la première tension $V_1$ peut avantageusement être définie par la formule :

$$V_1 = max \ (2,5 * V_{bat} \ ou \ 10,5 \ V)$$

Max correspond à la fonction maximum.

La figure 4 illustre un graphique de l'énergie fournie en fonction du nombre de cycles de charge/décharge, en comparaison du procédé selon l'invention (Pi) avec un procédé classique (Pc) de charge à tension constante, pour une batterie TFB. L'énergie reste constante en fonction du nombre de cycles, que ce soit avec uniquement la tension de charge usuelle ($V_{bat}$ = 4,2 V), ou avec une première tension ($V_1$ = 8 V) puis avec la tension de charge usuelle ($V_{bat}$ = 4,2 V).

Selon un mode de réalisation avantageux, la première étape est appliquée pour une quantité de charge telle que la résistance interne de la cellule ne soit pas supérieure à un seuil prédéterminé durant la première sous-étape.

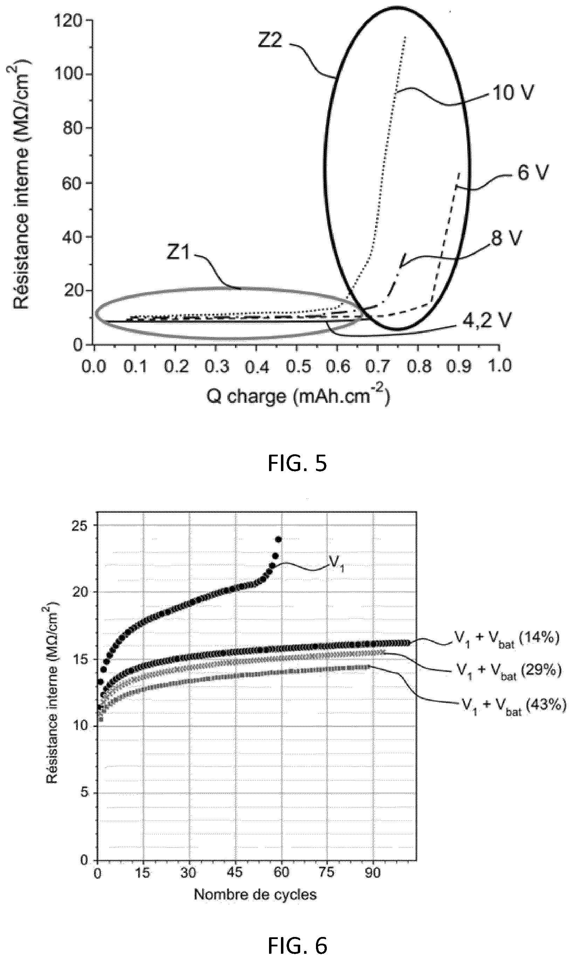

En effet, comme l'illustre la figure 5, la résistance interne de la cellule a tendance à rester sensiblement constante lorsque l'étape de tension constante comprend uniquement l'application de la tension de charge usuelle ($V_{bat}$ = 4,2 V), comme c'est le cas dans les procédés connus de l'homme du métier. La fin de la charge occasionne très peu de dégradations dans la cellule, (résistance interne autour de 10 M$\Omega$/cm$^2$).

Une étape de tension constante qui comprendrait uniquement l'application d'une tension supérieure à la tension de charge usuelle (par exemple 6 V, 8 V ou 10 V sur la figure 5) provoquerait une augmentation de la résistance interne de la cellule. En fonction de la tension appliquée, l'augmentation de la résistance interne peut être légère en début de charge (zone Z1), puis exponentielle en cours de charge (zone Z2). Ainsi, il faut éviter que la résistance interne ne se trouve dans la zone Z2. Le procédé selon l'invention repose sur le fait que le début de charge peut être effectué avec une première tension $V_1$ supérieure à la tension de charge usuelle $V_{bat}$, de façon à rester dans la zone Z1, puis, avant que la résistance interne ne dépasse une valeur seuil, la tension de charge est ramenée à la tension de charge usuelle $V_{bat}$.

Une ou plusieurs tensions intermédiaires peuvent être utilisées, pour éviter de passer brusquement de la première tension $V_1$ à la tension de charge usuelle $V_{bat}$.

La tension de charge peut basculer de la première tension V1 à la tension de charge usuelle $V_{bat}$ sans analyse systématique de la résistance interne. Pour un type de composant, le moment de transition peut être déterminé dans un premier temps à l'aide d'un graphe tel que celui représenté en figure 5. Le point de bascule peut être déterminé à partir d'un courant minimal atteint ou d'une capacité chargée atteinte ou d'une résistance mesurée. Une fois ce point sélectionné pour une configuration, il peut être imposé de manière systématique.

De plus, la résistance interne de la cellule peut être déterminée par différentes méthodes, notamment : l'analyse de la chute de tension interne de la cellule lorsqu'un courant est appliqué, l'envoi d'un courant pulsé à la cellule et mesure la réponse en tension, ou encore l'analyse d'impédance en appliquant un signal alternatif à la cellule.

La proportion de charge à la première tension $V_1$, par rapport à la quantité de charges totale (c'est-à-dire la charge à la première tension $V_1$ et la charge à la tension de charge maximale $V_{bat}$) est variable. Elle peut être choisie préalablement au début du cycle de charge, comme indiqué précédemment, ou en temps réel.

La figure 6 illustre la tenue en cyclage d'une cellule, avec différentes proportions de la charge à la première tension $V_1$ par rapport à la charge totale. La tenue en cyclage d'une cellule (ou d'une batterie, par extension) fait référence à sa capacité à subir de manière répétée et fiable des cycles de charge et de décharge sans une dégradation significative de ses performances ou de sa capacité.

Comme cela a été indiqué précédemment, une charge complète à la première tension $V_1$ (10 V sur la figure 6), pour plusieurs cycles de charge, aurait pour conséquence une augmentation conséquente, dès les premiers cycles de charge, de la valeur de la résistance interne de la cellule.

L'application d'une première tension $V_1$ (10 V sur la figure 6) supérieure à la tension de charge usuelle $V_{bat}$, puis l'application de la tension de charge usuelle $V_{bat}$ (4,2 V sur la figure 6), avec un pourcentage de capacité de charge générée à la tension de charge usuelle $V_{bat}$ sur la capacité totale générée à la première tension de charge $V_1$ et à la tension de charge usuelle $V_{bat}$ compris entre 10% et 50%, permet de contenir la dégradation de la cellule au fil des cycles de charge/décharge. Comme cela est visible sur la figure 6, avec des valeurs de 14%, 29% et 43%. Après une cinquantaine de cycles, la résistance interne tend vers une valeur seuil, respectivement d'environ 16 M$\Omega$/cm$^2$, 15M$\Omega$/cm$^2$ et 14 M$\Omega$/cm$^2$.

Avantageusement, la cellule comprend un électrolyte solide, ce qui permet d'améliorer la densité énergétique de la cellule. Ainsi, la cellule peut stocker plus d'énergie pour une taille donnée. Les cellules à électrolyte solide sont particulièrement adaptées aux dispositifs portatifs tels que des téléphones ou autres appareils électroniques connectés.

Le tableau suivant décrit les propriétés de certains électrolytes utilisés dans les batteries à électrolyte solide (également appelées batterie tout solide) :

| Electrolyte | $\sigma_{el}$ $(\Omega.m)^{-1}$ |
|---|---|
| LPS | $10^{-9}$ |
| LTP | $10^{-9}$-$10^{-2}$ |
| $\alpha$LZP | $10^{-9}$ |
| LAGP | $10^{-8}$ - $10^{-8}$ |

(suite)

| Electrolyte | $\sigma_{el}$ $(\Omega.m)^{-1}$ |
|---|---|
| LATP | $10^{-10}$ |
| LGPS | - |
| LLZO | $10^{-8}$ |
| LLTO | $10^{-9}$ |
| LiPON | $10^{-15}$ - $10^{-9}$ |
| LiSiON | $10^{-13}$ - $10^{-8}$ |
| Li$_3$OCl | $10^{-11}$ |
| LiN | $10^{-12}$ |
| PEO | - |

$\sigma_{el}$ correspond à la conductivité électronique, en $(\Omega.m)^{-1}$.

Il ressort du tableau que le LiPON (« Lithium Phosphorus OxyNitride » ou oxynitrure de lithium et de phosphore) a une très faible conductivité électronique (la conductivité électronique $\sigma_{el}$ est comprise entre $10^{-15}$ et $10^{-9}$ $(\Omega.m)^{-1}$), et peut donc être utilisé comme électrolyte dans le procédé de charge selon l'invention.

Les électrolytes dont la conductivité électronique est inférieure à $10^{-9}$ $(\Omega.m)^{-1}$ présentent de bonnes performances en termes de rapidité de la charge. Si la conductivité électronique est supérieure à $10^{-9}$, l'électrolyte devient un moins bon isolant électrique. Ainsi, la probabilité d'avoir des électrons dans cette couche sous un champ électrique est plus grande, donc la probabilité d'avoir la réaction suivante est plus élevée :

$$Li^+ + e^- \rightarrow Li$$

Une telle réaction implique une dégradation des performances de la batterie, car le lithium métallique dans le LiPON n'est pas mobile comme l'ion $Li^+$. Il forme des dendrites composées de lithium, qui amènent à un court-circuit dans la batterie.

D'autres matériaux peuvent être utilisés comme électrolyte, tels que le Li3OCl, le LiSiON, le LiN, le LATP (Lithium Aluminium Titanium Phosphate).

Le LLZTO (« Lithium Lanthanum Tantalum Zirconia Oxide ») et le LLZO (Lithium Lanthanum Zirconate Oxide) ont une conductivité électronique qui peut être supérieure à $10^{-9}$ $(\Omega.m)^{-1}$ ; ils sont donc incompatibles avec un procédé de charge rapide, comme décrit dans [4], [5] ou [6].

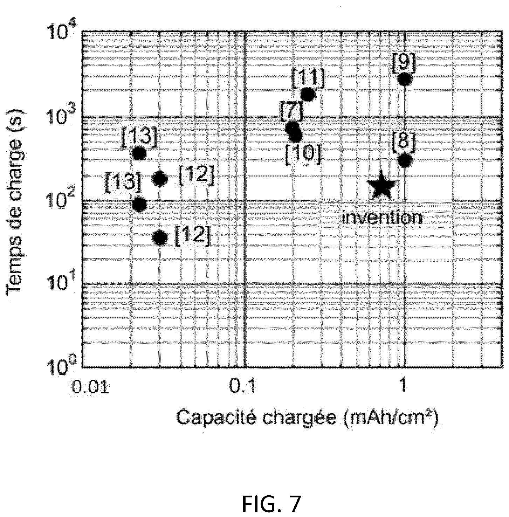

La figure 7 illustre les performances du procédé selon l'invention, en comparaison avec des procédés de l'état de la technique.

Les procédés de l'état de la technique représentés sur la figure 7 peuvent être répartis en trois groupes :

- Un premier groupe comprend les procédés [12] et [13], qui permettent d'obtenir une capacité chargée comprise entre 0,02 et 0,03 mAh/cm$^2$.

- Un deuxième groupe comprend les procédés [7], [10] et [11], qui permettent d'obtenir une capacité chargée comprise entre 0,2 et 0,3 mAh/cm$^2$.

- Un troisième groupe comprend les procédés [8] et [9], qui permettent d'obtenir une capacité chargée comprise entre 0,7 et 1 mAh/cm$^2$.

Dans le troisième groupe, qui correspond aux capacités de charge les plus élevées parmi celles de la base comparative, le procédé selon l'invention permet d'obtenir le temps de charge le plus rapide (100 secondes contre 300 secondes pour le procédé [8] et 3000 secondes pour le procédé [9]).

L'invention se rapporte également à un système de gestion de la charge d'une batterie, configuré pour mettre en oeuvre le procédé précité. Comme cela a été indiqué précédemment, le procédé a été décrit pour la charge d'une cellule d'accumulateur électrochimique. Il peut être étendu à la charge d'une batterie comprenant une pluralité de cellules connectées en série et/ou en parallèle, sans que cela ne pose de difficulté pour l'homme du métier.

Le système de gestion de la charge d'une batterie peut notamment contrôler la charge de la batterie en fonction des paramètres définis pour éviter une surcharge excessive, susceptible d'endommager la batterie. Pour cela, il peut comprendre une unité de calcul qui détermine notamment la valeur du courant constant lors de l'étape E1, la tension de charge usuelle, la durée de l'étape E1, la valeur de la première tension $V_1$, et la durée de l'étape E2.

**Références citées**

[1] US 11,677,102 B2

[2] US 10,446,883 B2

[3] US 11,444,339 B2

[4] Yaoyu Ren et al. "Direct observation of lithium dendrites inside garnet-type lithium-ion solid electrolyte". en. In: Electrochemistry Communications 57 (Aug. 2015), pp. 27-30. DOI: 10.1016/j.elecom.2015.05.001.

[5] Rachna Khurana et al. "Suppression of Lithium Dendrite Growth Using Cross-Linked Polyethylene/Poly(ethylene oxide) Electrolytes: A New Approach for Practical Lithium-Metal Polymer Batteries". en. In: J. Am. Chem. Soc. 136.20 (May 2014), pp. 7395-7402. DOI: 10.1021 /ja502133j.

[6] Till Fuchs et al. "Current Dependent Lithium Metal Growth Modes in "AnodeFree" SolidState Batteries at the Cu| LLZO Interface". en. In: Advanced Energy Materials 13.1 (Jan. 2023), p. 2203174. DOI: 10.1002/aenm.202203174.

[7] N. J. Taylor et al., Journal of Power Sources, vol. 396, pp. 314-318, Aug. 2018.

[8] K. Niitani et al., ACS Energy Lett., vol. 7, no. 1, pp. 145-149, Jan. 2022.

[9] T. Kobayashi et al., Electrochimica Acta, vol. 53, no. 15, pp. 5045-5050, Jun. 2008.

[10] G.-L. Zhu et al., Energy Storage Materials, vol. 31, pp. 267-273, Oct. 2020.

[11] H. Yamauchi et al., Sci Rep, vol. 10, no. 1, p. 9453, Jun. 2020.

[12] Z. Wang et al., ACS Appl. Mater. Interfaces, vol. 12, no. 43, pp. 48 677-48 683, Oct. 2020.

[13] J. Sastre et al., ACS Appl. Mater. Interfaces, vol. 12, no. 32, pp. 36 196-36 207, Aug. 2020.

**Revendications**

1. Procédé de charge d'au moins une cellule d'accumulateur électrochimique, dans lequel la tension aux bornes de la cellule est maintenue constante à au moins deux niveaux de tension prédéfinis successifs, le courant de charge fourni à la cellule diminuant progressivement à mesure que la batterie se charge,
   **caractérisé en ce que** le procédé comprend :

   E1) une première étape d'application d'une première tension $(V_1)$ aux bornes de la cellule, la première tension $(V_1)$ étant supérieure à une tension de charge usuelle $(V_{bat})$, la tension de charge usuelle $(V_{bat})$ étant définie comme étant une tension telle qu'elle n'entraînerait pas une dégradation électrochimique de la cellule si elle était appliquée sur un cycle complet de charge de la cellule ;
   E2) une deuxième étape d'application de la tension de charge usuelle $(V_{bat})$.

2. Procédé selon la revendication 1, dans lequel la première étape est appliquée pour un paramètre de charge tel que la résistance interne de la cellule ne soit pas supérieure à un seuil prédéterminé.

3. Procédé selon la revendication 2, dans lequel le paramètre de charge est sélectionné parmi une capacité de charge, un courant de charge, une tension de charge, ou un temps de charge.

4. Procédé selon l'une des revendications précédentes, dans lequel la première tension ($V_1$) est définie par la formule :

$$V_1 = \max (2{,}5 * V_{bat} \text{ ou } 10{,}5 \text{ V})$$

Max correspondant à la tension maximum, et $V_{bat}$ correspondant à la tension de charge usuelle de la cellule.

5. Procédé selon l'une des revendications précédentes, dans lequel le pourcentage de capacité de charge générée à la tension de charge usuelle sur la capacité totale générée à la première tension de charge ($V_1$) et à la tension de charge usuelle ($V_{bat}$) est compris entre 10% et 50%.

6. Procédé selon l'une des revendications précédentes, dans lequel la cellule comprend un électrolyte dont la conductivité électronique est inférieure à $10^{-9}$ $(\Omega.m)^{-1}$.

7. Procédé selon l'une des revendications précédentes, dans lequel la cellule comprend un électrolyte solide.

8. Procédé selon l'une des revendications précédentes, dans lequel l'électrolyte comprend l'un des matériaux sélectionné parmi le LiPoN, $Li_3OCl$, le LiSiON, le LiN, le LATP.

9. Procédé selon l'une des revendications précédentes, dans lequel la première tension ($V_1$) est appliquée tant que l'état de charge de la cellule d'accumulateur électrochimique est inférieure à une valeur limite prédéfinie ($SOC_{limite}$).

10. Procédé selon l'une des revendications précédentes, dans lequel la tension de charge usuelle ($V_{bat}$) est appliquée tant que l'état de charge de la cellule d'accumulateur électrochimique est inférieure à une valeur maximale prédéfinie ($SOC_{max}$).

11. Système de gestion de la charge d'au moins une cellule, **caractérisé en ce qu'**il est configuré pour mettre en oeuvre le procédé selon l'une des revendications précédentes.

FIG. 1

FIG. 2

FIG. 3

FIG. 4

FIG. 5

FIG. 6

FIG. 7

Europäisches
Patentamt

European
Patent Office

Office européen
des brevets

## RAPPORT DE RECHERCHE EUROPEENNE

Numéro de la demande

EP 24 20 8798

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/184836 A1 (SMITH ALEXANDER J [US]) 20 juin 2019 (2019-06-20) * alinéas [0112] - [0147]; figure 12 * ----- | 1-3,11 | INV. H02J7/00 |
| A | US 2010/172010 A1 (GUSTAVSSON GREGER [SE] ET AL) 8 juillet 2010 (2010-07-08) * pages 5-7; figure 9 * ----- | 1-11 | |
| A | CHIA-HSIANG LIN ET AL: "Fast charging technique for Li-Ion battery charger", ELECTRONICS, CIRCUITS AND SYSTEMS, 2008. ICECS 2008. 15TH IEEE INTERNATIONAL CONFERENCE ON, IEEE, PISCATAWAY, NJ, USA, 31 août 2008 (2008-08-31), pages 618-621, XP031362563, DOI: 10.1109/ICECS.2008.4674929 ISBN: 978-1-4244-2181-7 * alinéa [sectionIII]; figures 4,5 * ----- | 1-11 | |

| DOMAINES TECHNIQUES RECHERCHES (IPC) |
|---|
| H02J |

Le présent rapport a été établi pour toutes les revendications

| Lieu de la recherche | Date d'achèvement de la recherche | Examinateur |
|---|---|---|
| Munich | 23 avril 2025 | Grosse, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 24 20 8798

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-04-2025

| Document brevet cité au rapport de recherche | Date de publication | Membre(s) de la famille de brevet(s) | Date de publication |
|---|---|---|---|
| US 2019184836 A1 | 20-06-2019 | AUCUN | |
| US 2010172010 A1 | 08-07-2010 | CN 101707892 A | 12-05-2010 |
| | | EP 2165238 A1 | 24-03-2010 |
| | | JP 2010529488 A | 26-08-2010 |
| | | KR 20100017542 A | 16-02-2010 |
| | | US 2010172010 A1 | 08-07-2010 |
| | | WO 2008147322 A1 | 04-12-2008 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 11677102 B2
- US 10446883 B2
- US 11444339 B2


**Littérature non-brevet citée dans la description**

- **YAOYU REN et al.** Direct observation of lithium dendrites inside garnet-type lithium-ion solid electrolyte. *Electrochemistry Communications*, August 2015, vol. 57, 27-30
- **RACHNA KHURANA et al.** Suppression of Lithium Dendrite Growth Using Cross-Linked Polyethylene/-Poly(ethylene oxide) Electrolytes: A New Approach for Practical Lithium-Metal Polymer Batteries. *J. Am. Chem. Soc.*, May 2014, vol. 136 (20), 7395-7402
- **TILL FUCHS et al.** Current Dependent Lithium Metal Growth Modes in "AnodeFree" SolidState Batteries at the Cu|LLZO Interface. *Advanced Energy Materials*, January 2023, vol. 13 (1), 2203174
- **N. J. TAYLOR et al.** *Journal of Power Sources*, August 2018, vol. 396, 314-318
- **K. NIITANI et al.** *ACS Energy Lett.*, January 2022, vol. 7 (1), 145-149
- **T. KOBAYASHI et al.** *Electrochimica Acta*, June 2008, vol. 53 (15), 5045-5050
- **G.-L. ZHU et al.** *Energy Storage Materials*, October 2020, vol. 31, 267-273
- **H. YAMAUCHI et al.** *Sci Rep*, June 2020, vol. 10 (1), 9453
- **Z. WANG et al.** *ACS Appl. Mater. Interfaces*, October 2020, vol. 12 (43), 48677-48683
- **J. SASTRE et al.** *ACS Appl. Mater. Interfaces*, August 2020, vol. 12 (32), 36196-36207